# EUROPEAN PATENT APPLICATION

(11) **EP 4 123 382 A1**
(43) Date of publication of application: **25.01.2023**
(21) Application number: 22181908.9
(22) Date of filing: 29.06.2022
(51) Int. Cl.: G03G 15/00, B65H 5/38

(54) **SHEET CONVEYANCE GUIDE AND IMAGE FORMING APPARATUS INCORPORATING THE SHEET CONVEYANCE GUIDE**

(30) Priority: 20.07.2021 JP 2021119465; 22.04.2022 JP 2022070496
(71) Applicant: Ricoh Company, Ltd., Tokyo 143-8555 (JP)
(72) Inventor: MAKINO, Hideyo, Tokyo, 143-8555 (JP); AZAMI, Akira, Tokyo, 143-8555 (JP); OHASHI, Michihito, Tokyo, 143-8555 (JP); KOSUGE, Akio, Tokyo, 143-8555 (JP); HEMMI, Kaori, Tokyo, 143-8555 (JP)
(74) Representative: SSM Sandmair

(57) **Abstract**

A sheet conveyance guide (71, 72) includes a sheet material (71b, 71d). The sheet material (71b, 71d) has a surface to face a sheet (P) when the sheet conveyance guide (71, 72) guides the sheet (P) travelling in a conveyance direction. The sheet material (71b, 71d) has irregularities over a whole area of the surface.

## Description

### BACKGROUND

### Technical Field

Embodiments of the present disclosure relate to a sheet conveyance guide that guides a sheet conveyed in a given conveyance direction, and an image forming apparatus that includes the sheet conveyance guide. The image forming apparatus may be a copier, printer, facsimile machine, or multifunction peripheral (MFP) including at least two functions of the copier, the printer, and the facsimile machine.

### Background Art

In the related art, image forming apparatuses such as copiers and printers are known to employ a technique using a sheet conveyance guide (sheet conveyance plate) disposed downstream from a fixing device in a given conveyance direction of a sheet to guide the sheet conveyed in the given conveyance direction (for example, Japanese Unexamined Patent Application Publication No. 2014-078048).

Moreover, in order to prevent inconvenience where adjacent sheets are electrostatically attracted to each other after the sheets are ejected from the image forming apparatus to a sheet ejection tray, a technique is known to apply electric charge to each sheet after an image is fixed to the sheet (for example, Japanese Unexamined Patent Application Publication No. 2016-210575).

In typical techniques, a sheet may be electrostatically attracted to the sheet conveyance guide. Such electrostatic attraction of a sheet to the conveyance guide may cause a jam of the sheet (paper jam).

In particular, when the sheet is actively charged by a charging device after the fixing process as disclosed in Japanese Unexamined Patent Application Publication No. 2016-210575, an inconvenience may remarkably occur that the sheet is attracted to the conveyance guide disposed downstream from the charging device in the sheet conveyance direction.

### SUMMARY

The present disclosure is made to solve the above-described problems, and an object of the present disclosure is to provide a sheet conveyance guide that does not electrostatically attract a sheet easily and an image forming apparatus including the sheet conveyance guide.

Embodiments of the present disclosure described herein provide a novel sheet conveyance guide that includes a sheet material. The sheet material has a surface to face a sheet when the sheet conveyance guide guides the sheet travelling in a conveyance direction. The sheet material has irregularities over a whole area of the surface.

Further, embodiments of the present disclosure described herein provide an image forming apparatus including an image forming device configured to form an image on a sheet and the above-described sheet conveyance guide.

According to an embodiment of the present disclosure, a sheet conveyance guide and an image forming apparatus including the sheet conveyance guide prevent a sheet from being electrostatically attracted to the sheet conveyance guide.

### BRIEF DESCRIPTION OF THE SEVERAL VIEWS OF THE DRAWINGS

Exemplary embodiments of this disclosure will be described in detail based on the following figures, wherein:
FIG. 1 is a diagram illustrating an overall configuration of an image forming apparatus according to an embodiment of the present disclosure;
FIG. 2 is a diagram illustrating a configuration of a part of an image forming device of the image forming apparatus in FIG. 1;
FIG. 3 is a diagram illustrating a configuration of an intermediate transfer device of the image forming apparatus of FIG. 1;
FIG. 4 is a diagram illustrating a fixing device, an electric charge applicator, and an area near the fixing device and the electric charge applicator;
FIG. 5A a is a top view of the sheet conveyance guide;
FIG. 5B is a cross-sectional view of the sheet conveyance guide;
FIG. 6A is a cross-sectional view of a sheet material of the sheet conveyance guide;
FIG. 6B is a top view of the sheet material of the sheet conveyance guide;
FIG. 7A and 7B are schematic views, each illustrating sheets stacked on a sheet ejection tray;
FIG. 8 is a cross-sectional view of the sheet material of Modification 1;
FIG. 9 is a cross-sectional view of the sheet conveyance guide of Modification 2;
FIG. 10A is a perspective view of the sheet conveyance guide of FIG. 9; and FIG. 10B is a top view of the sheet conveyance guide of FIG. 9.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

It will be understood that if an element or layer is referred to as being "on," "against," "connected to" or "coupled to" another element or layer, then it can be directly on, against, connected or coupled to the other element or layer, or intervening elements or layers may be present. In contrast, if an element is referred to as being "directly on," "directly connected to" or "directly coupled to" another element or layer, then there are no intervening elements or layers present. Like numbers referred to like elements throughout. As used herein, the term "and/or" includes any and all combinations of one or more of the associated listed items.

Spatially relative terms, such as "beneath," "below," "lower," "above," "upper" and the like may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements describes as "below" or "beneath" other elements or features would then be oriented "above" the other elements or features. Thus, term such as "below" can encompass both an orientation of above and below. The device may be otherwise oriented (rotated 90 degrees or at other orientations) and the spatially relative descriptors herein interpreted accordingly.

The terminology used herein is for describing particular embodiments and examples and is not intended to be limiting of exemplary embodiments of this disclosure. As used herein, the singular forms "a," "an," and "the" are intended to include the plural forms as well, unless the context clearly indicates otherwise. It will be further understood that the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Referring now to the drawings, embodiments of the present disclosure are described below. In the drawings for explaining the following embodiments, the same reference codes are allocated to elements (members or components) having the same function or shape and redundant descriptions thereof are omitted below.

Next, a description is given of the configuration and functions of a sheet conveyance guide and an image forming apparatus, according to an embodiment of the present disclosure, with reference to drawings.

Note that identical reference numerals are assigned to identical components or equivalents and a description of those components is simplified or omitted.

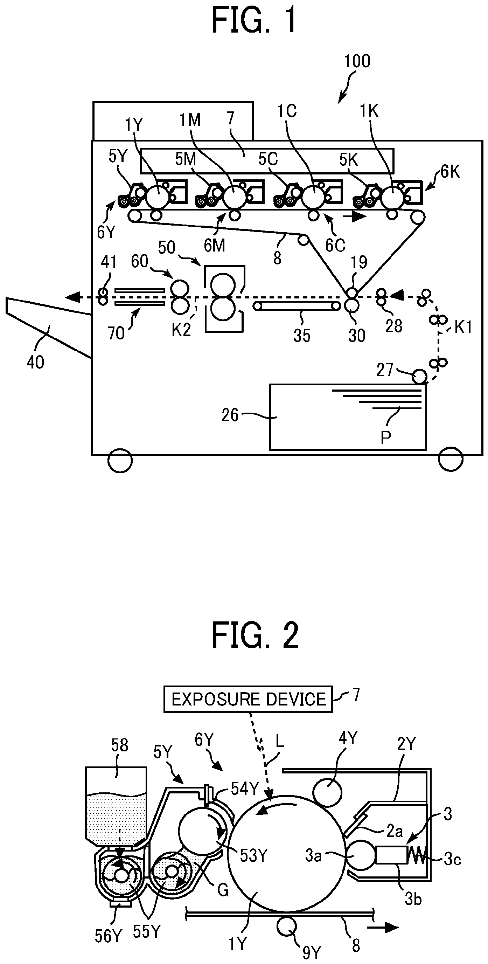

Initially with reference to FIGS. 1 and 2, a description is given of the overall configuration and operations of an image forming apparatus 100 according to an embodiment of the present disclosure.

FIG. 1 is a diagram illustrating an overall configuration of a printer according to an embodiment of the present disclosure. The printer is hereinafter referred to as an image forming apparatus 100.

FIG. 2 is a diagram illustrating a configuration of a part of an image forming device of the image forming apparatus 100 in FIG. 1.

As illustrated in FIG. 1, the image forming apparatus 100 includes an intermediate transfer belt 8 at the center of the housing of the image forming apparatus 100. The intermediate transfer belt 8 functions as an intermediate transferor and an image bearer.

The image forming apparatus 100 further includes image forming devices 6Y, 6M, 6C and 6K, respectively corresponding to the colors of yellow, magenta, cyan, and black. The image forming devices 6Y, 6M, 6C and 6K are arranged in parallel, facing the intermediate transfer belt 8.

Referring to FIG. 2, the image forming device 6Y that forms a yellow toner image includes a photoconductor drum 1Y, a charging device 4Y, a developing device 5Y, a cleaning device 2Y, a lubricant applicator 3, and a charge neutralizer. The photoconductor drum 1Y is a drum-shaped photoconductor that functions as an image bearer. The charging device 4Y, the developing device 5Y, the cleaning device 2Y, the lubricant applicator 3, and the charge neutralizer are image forming components disposed around the photoconductor drum 1Y. A series of image forming processes including charging, exposure, developing, primary transfer, cleaning, and electrical discharge processes is performed on the photoconductor drum 1Y. Accordingly, a yellow image is formed on the surface of the photoconductor drum 1Y.

The other three image forming devices 6M, 6C, and 6K also have almost the same configuration as the image forming device 6Y corresponding to yellow, except a configuration that the toner colors used are different. Due to such a configuration, a description below is given of the image forming device 6Y alone and descriptions of the other three image forming devices 6M, 6C, and 6K are appropriately omitted.

With reference to FIG. 2, a motor rotates the photoconductor drum 1Y counterclockwise in FIG. 2.

The charging device 4Y uniformly charges the surface of the photoconductor drum 1Y at a position opposite to and facing the charging device 4Y in the charging process.

The photoconductor drum 1Y is rotated further until reaching a position opposite to and facing an exposure device 7. The exposure device 7 irradiates the surface of the photoconductor drum 1Y with laser light L emitted from the exposure device 7 at this position and scans the surface of the photoconductor drum 1 in a width direction, which is a main scanning direction orthogonal to the drawing sheets on which FIGS. 1 and 2 are drawn. By performing the above-described operation, the exposure device 7 forms or writes an electrostatic latent image corresponding to the color of yellow on the surface of the photoconductor drum 1Y in the exposure process.

As the surface of the photoconductor drum 1Y reaches a position opposite to and facing the developing device 5Y, the electrostatic latent image is developed with toner into a yellow toner image in the development process.

As the surface of the photoconductor drum 1Y bearing the toner image reaches a position opposite to and facing the intermediate transfer belt 8 (image bearer) functioning as an intermediate transferor and a primary transfer roller 9Y with the intermediate transfer belt 8 being interposed, the toner image on the surface of the photoconductor drum 1Y is primarily transferred onto the surface of the intermediate transfer belt 8 at this position in the primary transfer process. In the primary transfer process, a small amount of residual toner remains on the surface of the photoconductor drum 1Y.

Then, the photoconductor drum 1Y is rotated further until reaching a position opposite to and facing the cleaning device 2Y The cleaning device 2Y includes a cleaning blade 2a to collect the residual toner (untransferred toner) remaining on the surface of the photoconductor drum 1Y into the cleaning device 2Y in the cleaning process.

The cleaning device 2Y includes the lubricant applicator 3 for applying lubricant onto the photoconductor drum 1Y. The lubricant applicator 3 includes a lubricant supply roller 3a, a solid lubricant 3b, and a compression spring 3c. While rotating clockwise in FIG. 2, the lubricant supply roller 3a gradually scrapes the solid lubricant 3b off to supply the lubricant to the surface of the photoconductor drum 1Y by the lubricant supply roller 3a.

Subsequently, the surface of the photoconductor drum 1Y reaches a position opposite the charge neutralizer. The charge neutralizer removes residual potentials from the photoconductor drum 1Y at this position.

Due to such a configuration, the series of image forming processes performed on the surface of the photoconductor drum 1Y is completed.

Note that the other image forming devices 6M, 6C, and 6K perform the series of image forming processes described above in substantially the same manner as the image forming device 6Y for yellow. In other words, the exposure device 7 disposed above the image forming devices 6M, 6C, and 6K emits respective laser light beams L based on respective image data, toward the photoconductor drum 1M of the image forming device 6M, the photoconductor drum 1C of the image forming device 6C and the photoconductor drum 1K of the image forming device 6K.

After this operation, the toner images of the respective colors formed on the photoconductor drums 1M, 1C, and 1K through developing processes by the developing devices 5M, 5C, and 5K, respectively, are primarily transferred onto the intermediate transfer belt 8 in an overlapping manner. Thus, a color toner image is formed on the intermediate transfer belt 8.

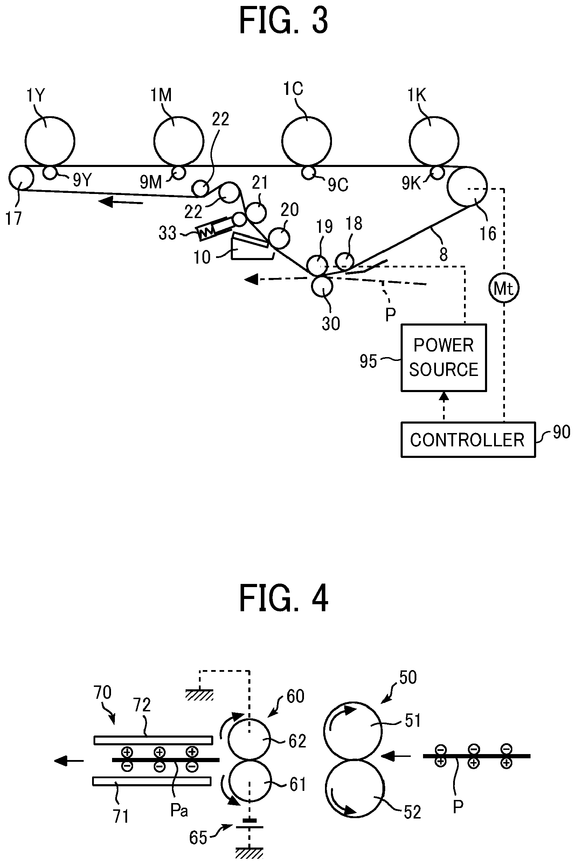

Now, referring to FIG. 3, a description is given of the intermediate transfer device of the image forming apparatus 100.

FIG. 3 is a diagram illustrating a configuration of the intermediate transfer device of the image forming apparatus 100 of FIG. 1.

Referring now to FIG. 3, the intermediate transfer belt device includes the intermediate transfer belt 8 serving as an intermediate transferor, the four primary transfer rollers 9Y, 9M, 9C, and 9K, a drive roller 16, a driven roller 17, a pre-transfer roller 18, upstream and downstream tension rollers 22, a cleaning backup roller 20, a lubricant backup roller 21, an intermediate transfer belt cleaning device 10, a lubricant applicator 33 for applying lubricant onto the intermediate transfer belt 8, a secondary transfer backup roller 19, and a secondary transfer roller 30. The intermediate transfer belt 8 serving as an intermediate transferor is entrained around and supported by the multiple rollers 16 to 22 and is formed into an endless loop. As a drive motor drives and rotates the drive roller 16, the intermediate transfer belt 8 is rotated in a direction indicated by arrow in FIG. 3.

The four primary transfer rollers 9Y, 9M, 9C, and 9K nip the intermediate transfer belt 8 together with the four photoconductor drums 1Y, 1M, 1C, and 1K, respectively. By so doing, the four primary transfer rollers 9Y, 9M, 9C, and 9K form the four primary transfer nip regions between the intermediate transfer belt 8 and the photoconductor drums 1Y, 1M, 1C, and 1K, respectively. A transfer voltage (i.e., a primary transfer bias) having a polarity opposite to a polarity of toner is applied to each of the primary transfer rollers 9Y, 9M, 9C, and 9K.

The intermediate transfer belt 8 moves in the direction indicated by arrow in FIG. 3 and sequentially passes through the primary transfer nip regions formed with the primary transfer rollers 9Y, 9M, 9C, and 9K. Due to this configuration, the toner images formed on the respective photoconductor drums 1Y, 1M, 1C, and 1K are primarily transferred onto the intermediate transfer belt 8 in a manner of being superimposed one atop another to form a composite color toner image on the intermediate transfer belt 8 in the primary transfer process.

After the superimposed toner images of yellow, cyan, magenta, and black have been transferred onto the intermediate transfer belt 8, the intermediate transfer belt 8 reaches a position opposite to and facing the secondary transfer roller 30 functioning as a transfer rotator. At this position, the secondary transfer backup roller 19 nips the intermediate transfer belt 8 with the secondary transfer roller 30 to form an area of contact. This area of contact is referred to as a secondary transfer nip region. At the secondary transfer nip region, the composite color toner image (or four-color toner image including yellow, magenta, cyan, and black colors) is secondarily transferred from the intermediate transfer belt 8 onto a sheet P serving as a recording medium conveyed to the position of the secondary transfer nip region, in a secondary transfer process.

At this time, the untransferred toner (residual toner) that has not been transferred onto the sheet P remains on the intermediate transfer belt 8.

The surface of the intermediate transfer belt 8 then reaches a position opposite to and facing the intermediate transfer belt cleaning device 10. At this position, the intermediate transfer belt cleaning device 10 removes substances such as residual toner adhering to the surface of the intermediate transfer belt 8.

Subsequently, the surface of the intermediate transfer belt 8 reaches a position opposite to and facing the lubricant applicator 33 for applying lubricant onto the intermediate transfer belt 8. At this position, the lubricant applicator 33 applies lubricant to the outer circumferential surface of the intermediate transfer belt 8.

As described above, a series of transfer processes performed on the outer circumferential surface of the intermediate transfer belt 8 is completed.

Referring back to FIG. 1, a sheet feeding device 26 is disposed in a lower portion of the housing of the image forming apparatus 100. The sheet P is conveyed from the sheet feeding device 26 to the secondary transfer nip region via, for example, a sheet feed roller 27 and a registration roller pair 28.

Specifically, the sheet feeding device 26 contains a stack of sheets P such as multiple sheets stacked on one on another. The sheet feed roller 27 is rotated counterclockwise in FIG. 1 to pick up and feed an uppermost sheet P of the plurality of sheets P toward a portion between rollers of the registration roller pair 28 via a first sheet conveyance passage K1.

The sheet P conveyed to the registration roller pair 28 serving as a timing roller pair temporarily stops at a position in an area of contact between the rollers of the registration roller pair 43 that stops rotating. The area of contact of the registration roller pair 28 is referred to as a registration roller nip region. As the registration roller pair 28 is rotated in synchrony with movement of the color image formed on the intermediate transfer belt 8, the sheet P is conveyed toward the secondary transfer nip region. As described above, the desired color toner image is transferred onto the sheet P.

Subsequently, the sheet P bearing the color toner image transferred at the position in the secondary transfer nip region passes through the secondary transfer nip region. Then, the sheet P is conveyed by a conveyance belt 35 to the fixing device 50. At this position in the fixing device 50, the color toner image is fixed onto the sheet P by application of heat and pressure from a fixing roller 51 and a pressure roller 52 in a fixing process (see FIG. 4).

After the color toner image is fixed to the sheet P in the fixing device 50, the sheet P bearing the fixed toner image is conveyed through a second sheet conveyance passage K2 and is ejected to the outside of the image forming apparatus 100 by a sheet ejection roller pair 41. As described below, an electric charge applicator 60 and a conveyance guide device 70 are disposed along the second sheet conveyance passage K2.

The sheets P ejected one by one by the sheet ejection roller pair 41 to the outside of the image forming apparatus 100 are sequentially stacked as output images on a stacking portion.

After these processes, a series of image formation of the image forming apparatus 100 is completed.

Next, a detailed description is given of a configuration and operation of the developing device 5Y of the image forming device 6Y, with reference again to FIG. 2.

The developing device 5Y includes a developing roller 53Y, a doctor blade 54Y, two toner conveyance screws 55Y, and a toner concentration detection sensor 56Y The developing roller 53Y is disposed opposite to and facing the photoconductor drum 1Y. The doctor blade 54Y is disposed opposite to and facing the developing roller 53Y. Each of the two toner conveyance screws 55Y is disposed in a developer container of the developing device 5Y. The toner concentration detection sensor 56Y detects a toner concentration in developer G.

The developing roller 53Y includes a magnet and a sleeve. The magnet is fixed inside the developing roller 53Y. The sleeve rotates about the magnet. The developer container contains the developer G, which is a two-component developer including carrier (or carrier particles) and toner (or toner particles).

The developing device 5Y thus configured operates as described below.

The sleeve of the developing roller 53Y rotates in the direction indicated by arrow in FIG. 2. The magnet generates a magnetic field, which moves the developer G borne on the developing roller 53Y along with rotation of the sleeve on the developing roller 53Y. The developer G in the developing device 5 is adjusted so that the percentage of toner (i.e., the toner density) in the developer G falls within a given range. Specifically, in response to detection of low toner concentration by the toner concentration detection sensor 56Y disposed in the developing device 5Y, fresh toner (new toner) is supplied from the toner container 58 into the developing device 5Y so that the toner concentration falls within the given range.

The toner supplied into the developer container from the toner container 58 is circulated in two isolated chambers of the developer container while being stirred and mixed with the developer G by the two toner conveyance screws 55Y disposed in the respective chambers. By so doing, the toner moves in a direction perpendicular to the surface of the drawing sheet on which FIG. 2 is drawn. The toner in the developer G is electrically charged by friction with the carrier, so that the toner is attracted to the carrier. Both the toner and the carrier are borne on the developing roller 53Y due to a magnetic force generated on the developing roller 53Y.

The developer G borne on the developing roller 53Y is conveyed in the direction indicated by arrow in FIG. 2 and reaches a position opposite to and facing the doctor blade 54Y At this position, the doctor blade 54Y adjusts the amount of the developer G on the developing roller 53Y to an appropriate amount. Then, the developer G on the developing roller 53Y is conveyed to a position opposite to and facing the photoconductor drum 1Y (i.e., a development area). In the development area, the toner is attracted to the electrostatic latent image formed on the photoconductor drum 1Y by an electric field generated in the developing area. After the toner has been attracted to the electrostatic latent image, the developer G remaining on the developing roller 53Y is conveyed to an upper portion of the developer container along with rotation of the sleeve of the developing roller 53Y, where the developer G is separated from the developing roller 53Y.

Note that the toner container 58 is detachably (replaceably) attached on the developing device 5Y in the image forming apparatus 100. Specifically, when the fresh toner contained in the toner container 58 is consumed to be empty, the toner container 58 with no toner is removed from the developing device 5Y in the image forming apparatus 100 and is replaced with a new toner container 58 with fresh toner.

Next, a detail description is given of the intermediate transfer belt device according to the present embodiment, with reference to the drawings including FIG. 3.

Referring now to FIG. 3, the intermediate transfer belt device includes the intermediate transfer belt 8 serving as an image bearer, the four primary transfer rollers 9Y, 9M, 9C, and 9K, the drive roller 16, the driven roller 17, the pre-transfer roller 18, the upstream and downstream tension rollers 22, the cleaning backup roller 20, the lubricant backup roller 21, the intermediate transfer belt cleaning device 10, the lubricant applicator 33 for applying lubricant onto the intermediate transfer belt 8, the secondary transfer backup roller 19, and the secondary transfer roller 30.

The intermediate transfer belt 8 contacts the four photoconductor drums 1Y, 1M, 1C, and 1K, bearing the toner images of the respective colors to form the primary transfer nip regions. The intermediate transfer belt 8 is stretched around and supported by eight rollers, which are the drive roller 16, the driven roller 17, the pre-transfer roller 18, the upstream and downstream tension rollers 22, the cleaning backup roller 20, the lubricant backup roller 21, and the secondary transfer backup roller 19.

The primary transfer rollers 9Y, 9M, 9C, and 9K contact the photoconductor drums 1Y, 1M, 1C, and 1K, respectively, via the intermediate transfer belt 8. Similarly, the primary transfer roller 9M for magenta contacts the photoconductor drum 1M for magenta via the intermediate transfer belt 8. The primary transfer roller 9C for cyan contacts the photoconductor drum 1C for cyan via the intermediate transfer belt 8. The primary transfer roller 9K for black contacts the photoconductor drum 1K for black via the intermediate transfer belt 8. Specifically, the primary transfer roller 9Y for yellow contacts the photoconductor drum 1Y for yellow via the intermediate transfer belt 8.

The drive roller 16 is disposed in contact with an inner circumferential face of the intermediate transfer belt 8 by an angle of belt winding of about 120 degrees at a position downstream from the four photoconductor drums 1Y, 1M, 1C, and 1K in a direction of rotation (travel direction) of the intermediate transfer belt 8. The drive roller 16 is rotated clockwise in FIG. 3 by a drive motor Mt that is controlled by a controller 90. With such a configuration, the intermediate transfer belt 8 rotates in a predetermined direction (i.e., clockwise in FIG. 3) as indicated by arrow in FIG. 3.

The driven roller 17 is disposed in contact with the inner circumferential face of the intermediate transfer belt 8 by the angle of belt winding of about 180 degrees at a position upstream from the four photoconductor drums 1Y, 1M, 1C, and 1K in the direction of rotation (travel direction) of the intermediate transfer belt 8. A portion of the intermediate transfer belt 8 extending from the driven roller 17 to the drive roller 16 via the four photoconductor drums 1Y, 1M, 1C, and 1K is substantially horizontal. The driven roller 17 is rotated clockwise in FIG. 3 as the intermediate transfer belt 8 rotates.

The upstream tension roller 22 contacts an outer circumferential face of the intermediate transfer belt 8. The pre-transfer roller 18, the cleaning backup roller 20, the lubricant backup roller 21, the downstream tension roller 22, and the secondary transfer backup roller 19 contact the inner circumferential face of the intermediate transfer belt 8.

The intermediate transfer belt cleaning device 10 is disposed between the secondary transfer backup roller 19 and the lubricant backup roller 21. The intermediate transfer belt cleaning device 10 includes a cleaning blade that contacts the cleaning backup roller 20 via the intermediate transfer belt 8.

The lubricant applicator 33 for applying lubricant onto the intermediate transfer belt 8 is disposed between the cleaning backup roller 20 and the upstream tension rollers 22. The lubricant applicator 33 is in contact with the lubricant backup roller 21 via the intermediate transfer belt 8. Similar to the lubricant applicator 3 for the photoconductor drums 1, the lubricant applicator 33 for the intermediate transfer belt 8 includes a lubricant supply roller, a solid lubricant, and a compression spring. The lubricant supply roller rotating counterclockwise in FIG. 3 rubs (scrapes) a small amount of lubricant from the solid lubricant and applies the lubricant to the surface of the intermediate transfer belt 8.

The rollers 17 through 22 other than the drive roller 16 are driven to rotate as the intermediate transfer belt 8 rotates.

Referring to FIG. 3, the secondary transfer backup roller 19 is in contact with the secondary transfer roller 30 via the intermediate transfer belt 8. The secondary transfer backup roller 19 includes a cylindrical core made of, for example, stainless steel, having an elastic layer on the outer circumferential face of the core. The elastic layer is made of acrylonitrile-butadiene rubber (NBR). The elastic layer has a volume resistivity ranging from approximately 107 Ω·cm to 108 Ω·cm, and a hardness ranging from approximately 48 to 58 degrees on Japanese Industrial Standards A hardness (JIS-A hardness) scale. The elastic layer has a thickness of approximately 5 mm.

According to the present embodiment, the secondary transfer backup roller 19 is electrically connected to a power source 95 as a bias output device. The power source 95 outputs a secondary transfer bias as a high voltage. With the secondary transfer bias applied to the secondary transfer backup roller 19, the toner image primarily transferred on the surface of the intermediate transfer belt 8 is secondarily transferred onto the sheet P conveyed to the secondary transfer nip region. The secondary transfer bias has the same polarity as the polarity of toner. In the present embodiment, the secondary transfer bias is a direct current voltage in a negative polarity. With this configuration, the toner borne on the outer circumferential face (toner bearing face) of the intermediate transfer belt 8 electrostatically moves from the secondary transfer backup roller 19 toward the secondary transfer roller 30 due to a secondary transfer electric field.

The secondary transfer roller 30 nips the intermediate transfer belt 8 with the secondary transfer backup roller 19 to form the secondary transfer nip region. The secondary transfer roller 30 includes a hollow tubular core made of, for example, stainless steel of aluminum, and an elastic layer coated on (covered over) the core. The elastic layer has a hardness ranging from approximately 40 to 50 degrees on Asker C hardness scale. To form the elastic layer of the secondary transfer roller 30, a rubber material, such as polyurethane, ethylene-propylene-diene monomer (EPDM) or silicone, is formed into a solid or foamed state as described below. A conductive filler, such as carbon, is dispersed in the rubber material. Alternatively, an ionic conductive material is included in the rubber material. According to the present embodiment, the elastic layer of the secondary transfer roller 30 has a volume resistivity ranging from 106.5 Ωcm to 107.5 Ωcm to prevent concentration of a transfer current. In the present embodiment, the secondary transfer roller 30 is electrically grounded.

Now, a detailed description is given of the sheet conveyance guides 71 and 72 included in the image forming apparatus 100 according to the present embodiment, with reference to FIGS. 3 through 6.

FIG. 4 is a diagram illustrating the fixing device 50, the electric charge applicator 60, and an area near the fixing device 50 and the electric charge applicator 60.

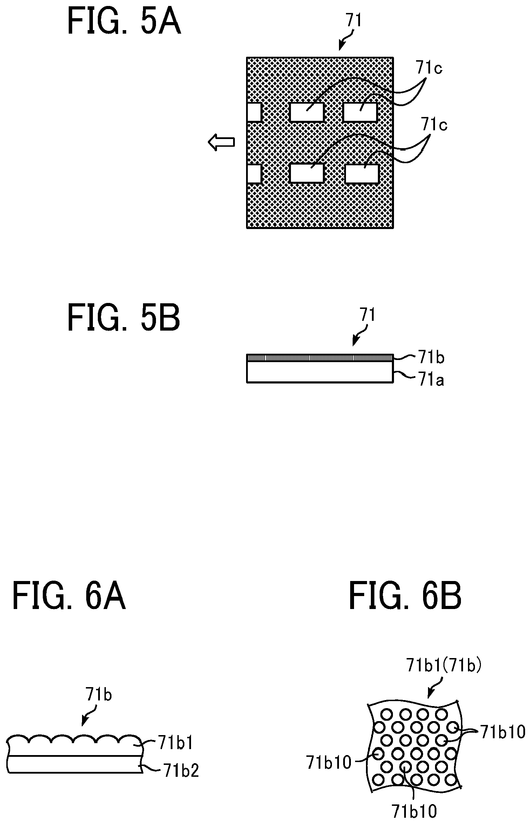

FIG. 5A is a top view of the sheet conveyance guide 71.

FIG. 5B is a cross-sectional view of the sheet conveyance guide 71.

FIG. 6A is a cross-sectional view of a sheet material of the sheet conveyance guide 71.

FIG. 6B is a top view of the sheet material of the sheet conveyance guide 71.

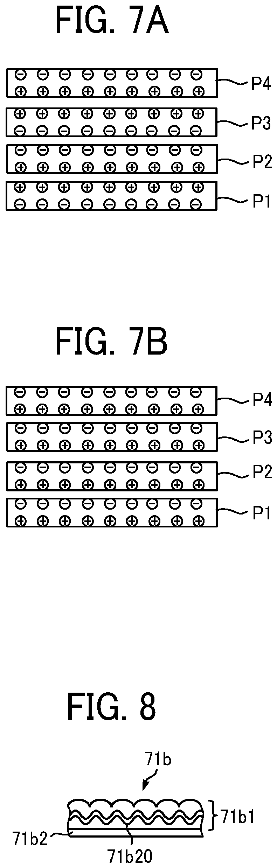

FIG. 7A and 7B are schematic views, each illustrating sheets stacked on a sheet ejection tray.

As described above with reference to the drawings including FIG. 1, the image forming apparatus 100 according to the present embodiment includes the fixing device 50 that fixes a toner image transferred on the surface of the sheet P conveyed in the given direction indicated by arrow in FIG. 4.

The fixing device 50 according to the present embodiment includes the fixing roller 51 and the pressure roller 52. The fixing roller 51 includes a heater serving as a heat source. The pressure roller 52 contacts the fixing roller 51 to form a fixing nip region to which the sheet P is conveyed. The fixing roller 51 and the pressure roller 52 rotate in respective directions indicated by respective arrows in FIG. 4.

As described above with reference to the drawings including FIG. 4, the image forming apparatus 100 according to the present embodiment includes the electric charge applicator 60 disposed downstream from the fixing device 50 in the sheet conveyance direction (left side in FIG. 4). The electric charge applicator 60 that functions as a charge applicator applies electric charge to the sheet P that is conveyed in the given direction indicated by arrow in FIG. 4.

The electric charge applicator 60 includes a bias roller 61 and a backup roller 62. The bias roller 61 applies voltage from a power source 65. The backup roller 62 contacts the bias roller 61 to form a charging nip region to which the sheet P is conveyed. The bias roller 61 and the backup roller 62 rotate in respective directions indicated by respective arrows in FIG. 4.

The power source 65 switches between two modes on whether or not negative voltage is applied to the bias roller 61 under the control of the controller 90. The backup roller 62 is electrically grounded.

As illustrated in FIG. 4, the electric charge applicator 60 applies electric charges to the sheet P to reverse the polarity of charges accumulated on the front face of the sheet P (negative polarity in the present embodiment) and the polarity of charges accumulated on the back face of the sheet P (positive polarity in the present embodiment).

Specifically, in the present embodiment, as the sheet P passes through the secondary transfer nip region, the secondary transfer bias having the negative polarity is applied to the secondary transfer backup roller 19. As a result, the toner having the negative polarity adheres to the front face (upper face) of the sheet P, the electric charges having the negative polarity are accumulated on the front face of the sheet P, and the electric charges having the positive polarity are accumulated on the back face (lower face) of the sheet P. As described above, the electric charge applicator 60 applies voltage having the negative polarity to the bias roller 61 that is in contact with the back face of the sheet P on which electric charges are thus accumulated. By so doing, electric charges having the positive polarity are accumulated on the front face (upper face) of a sheet Pa and electric charges having the negative polarity are accumulated on the back face (lower face) of the sheet Pa.

The controller 90 causes the electric charge applicator 60 to apply electric charge to alternate sheets P in a case where multiple sheets P are continuously conveyed.

Specifically, referring to FIG. 7A, the electric charge applicator 60 is turned off for the first sheet P1 so that no voltage is applied to the bias roller 61 and is turned on for the second sheet P2 so that voltage is applied to the bias roller 61, during continuous conveyance of the sheets in the present embodiment. Like this operation, the electric charge applicator 60 is turned off for the third sheet P3, the fifth sheet, and subsequent odd-numbered sheets and is turned on for the fourth sheet P4, the sixth sheet, and subsequent even-numbered sheets. Note that the first sheet P1, the second sheet P2, the third sheet P3, and the fourth sheet P4 may be collectively referred to as the sheets P1 to P4.

Due to such a configuration, the sheets P1 to P4 stacked on the sheet ejection tray 40 (see FIG. 1) have the electric charges of the same polarity on the faces of the adjacent sheets in the vertical direction (i.e., the upper face of a lower sheet and the lower face of an upper sheet) of the adjacent sheets as illustrated in FIG. 7A, and the adjacent sheets P are less likely to be attracted to each other.

By contrast, if the electric charge applicator 60 does not apply electric charge to alternate sheets P as described above, the sheets P1 to P4 stacked on the sheet ejection tray 40 have the electric charges of the opposite polarities on the faces of the adjacent sheets in the vertical direction (i.e., the lower face of the upper sheet and the upper face of the lower sheet) of the adjacent sheets as illustrated in FIG. 7B, and the adjacent sheets P are likely to be attracted to each other.

According to this configuration, various sheet failures are likely to occur easily. Such sheet failures include paper jam or a stacking failure due to attraction and adhesion of the sheets P as the sheets P are sequentially stacked on the sheet ejection tray 40, and an alignment failure of the sheets P (sheet bundle) stacked on the sheet ejection tray 40 when the sheets P are manually grasped, separated, and aligned.

In particular, such an inconvenience occurs if the sheet P includes a resin film or a material having high chargeability and high possibility to increase the amount of charges accumulated on the surface of the sheets P. Such an inconvenience also occurs as the number of sheets P stacked in the vertical direction increases.

In the present embodiment, since the sheets P vertically adjacent to each other are not likely to be attracted to each other easily, occurrence of the above-described failures is reduced.

As illustrated in FIG. 4, the image forming apparatus 100 according to the present embodiment includes the sheet conveyance guides 71 and 72 included in the conveyance guide device 70. The sheet conveyance guides 71 and 72 of the conveyance guide device 70 are disposed downstream from the electric charge applicator 60 in the sheet conveyance direction (left side of FIG. 4).

Since the two sheet conveyance guides 71 and 72 have substantially the same configuration except that the positions in the vertical direction are different, a description is given of the sheet conveyance guide 71, with reference to FIGS. 5A to 6B, and the description of the sheet conveyance guide 72 will be omitted.

Specifically, the conveyance guide device 70 is disposed downstream from the electric charge applicator 60 and upstream from the sheet ejection roller pair 41 in the sheet conveyance direction. In other words, the conveyance guide device 70 extends between the electric charge applicator 60 and the sheet ejection roller pair 41 in the sheet conveyance direction. As described above, the conveyance guide device 70 includes the sheet conveyance guides 71 and 72. The sheet conveyance guide 71 functions as a first conveyance guide (lower guide plate) facing the lower face of the sheet P as the sheet P passes the position of the sheet conveyance guide 71. The sheet conveyance guide 72 functions as a second conveyance guide (upper guide plate) facing the upper face of the sheet P as the sheet P passes the position of the sheet conveyance guide 72. As illustrated in FIGS. 4, 5A, and 5B, each of the sheet conveyance guides 71 and 72 is a substantially flat planar member that guides the sheet P conveyed in a given conveyance direction indicated by arrow in FIG. 4, and serves to enhance the conveyance performance of the sheet P.

Each of the sheet conveyance guides 71 and 72 according to the present embodiment has openings 71c through which a conveyance roller protrudes. However, such a conveyance roller may be omitted.

In the present embodiment, the sheet conveyance guides 71 and 72 are electrically grounded.

Fine irregularities are formed over the whole area of a surface of each of the sheet conveyance guides 71 and 72 according to the present embodiment. The surface is the top face of the sheet conveyance guide 71 in FIG. 5B and is to face the sheet P.

With the sheet conveyance guides 71 and 72, if the sheet P contacts the sheet conveyance guides 71 and 72, the contact area may be significantly reduced. Such a reduction in the contact area decreases or prevents occurrence of the failure that the sheet Pa (see FIG. 4) passing through the position is electrostatically attracted to the sheet conveyance guides 71 and 72. As a result, the failure that the sheet P is attracted to the sheet conveyance guides 71 and 72 to cause paper jam is also decreased or prevented.

In particular, in the present embodiment, the electric charge applicator 60 actively charges the sheet P after the fixing process. The sheet P actively charged by the electric charge applicator 60 is likely to be attracted to the sheet conveyance guides 71 and 72 disposed downstream from the electric charge applicator 60 in the sheet conveyance direction. To address this inconvenience, it is useful to provide fine irregularities on the surface of each of the sheet conveyance guides 71 and 72 as described above.

In addition, even when a material such as a resin film having high chargeability to be easily attracted to the sheet conveyance guides 71 and 72 is conveyed, such fine irregularities formed on the surface of each of the sheet conveyance guides 71 and 72 reduces occurrence of attraction of the sheet P to the sheet conveyance guides 71 and 72.

More specifically, as illustrated in FIG. 5B, each of the sheet conveyance guides 71 and 72 according to the present embodiment includes a base 71a (base plate) and a sheet material 71b attached to the surface of the base 71a. The surface of the sheet material 71b has irregularities (including convex and concave portions).

The base 71a may employ an electrogalvanized steel sheet such as silver top, a nickel-plated steel sheet, or a stainless-steel sheet. The sheet material 71b is made of a low friction material such as a fluorocarbon resin film (fluorocarbon resin) and is adhered to the base 71a. The sheet material 71b has the surface to face the sheet P and at least the irregularities (convex-concave portions) on the surface are made of the low friction material.

As described above, each of the sheet conveyance guides 71 and 72 has the surface with irregularities made of the low friction material. Due to such a configuration, even if the sheet Pa passing through the position contacts (slidingly contacts) the sheet conveyance guides 71 and 72, the frictional resistance is reduced, and the conveyance performance of the sheet P is not deteriorated.

In particular, since the sheet material 71b is made of a low friction material containing carbon, even if the sheet Pa contacts (slidingly contacts) the sheet conveyance guides 71 and 72, the sheet conveyance guides 71 and 72 are less likely to be charged. As a result, the effect of preventing attraction of the sheet P is stably maintained over time.

Now, referring to FIGS. 6A and 6B, the irregularities (convex and concave portions) on the surface of each of the sheet conveyance guides 71 and 72 (sheet material 71b) are embossed portions 71b10 arranged in a staggered (zigzag) manner. Each of the embossed portions 71b10 has the outer diameter of 1 mm to 1.5 mm and a height (depth) of 0.05 mm to 0.1 mm.

Specifically, as illustrated in FIGS. 6A and 6B, the sheet material 71b includes a fluorine resin layer 71b1 and an adhesive layer 71b2. The fluorine resin layer 71b1 is, for example, a polytetrafluoroethylene (PTFE) film, on which the embossed portions 71b10 (convex portions formed in substantially a hemispherical shape in the present embodiment) are arranged in a staggered (zigzag) manner. The adhesive layer 71b2 that is made of, for example, a silicone-based adhesive is formed on the bottom face of the fluorine resin layer 71b1. The sheet material 71b formed in the above-described manner is adhered on the base 71a (see FIG. 5B) via the adhesive layer 71b2.

As a result of an experiment, the inventor of the present application has confirmed that the sheet P is hardly attracted to the sheet conveyance guides 71 and 72 with the sheet material 71b formed as described above being adhered to the base 71a.

### Modification 1

Now, a description is given of the sheet conveyance guide 71 of Modification 1, with reference to FIG. 8.

FIG. 8 is a cross-sectional view of the sheet material of Modification 1.

As illustrated in FIG. 8, the sheet material 71b of the sheet conveyance guide 71 in Modification 1 has the surface with the irregularities having the arithmetic average roughness of 3 µm to 5 µm.

Specifically, the sheet material 71b in Modification 1 is obtained by including fluorine resin (i.e., PTFE) in glass cloth (glass fibers) and firing the fluorine resin, and a layer formed of glass cloth 71b20 having a count of 500 to 600 is provided for the fluorine resin layer 71b1. The arithmetic average roughness of the surface that is to face the sheet P is 3 µm to 5 µm. The sheet material 71b formed in the above-described manner is adhered on the base 71a (see FIG. 5B) via the adhesive layer 71b2.

As a result of experiments, the inventors of the present application have confirmed that attraction of the sheet P to the sheet conveyance guides 71 and 72 hardly occurs even if the sheet conveyance guides 71 and 72 each having the sheet material 71b adhered on the base 71a are used.

### Modification 2

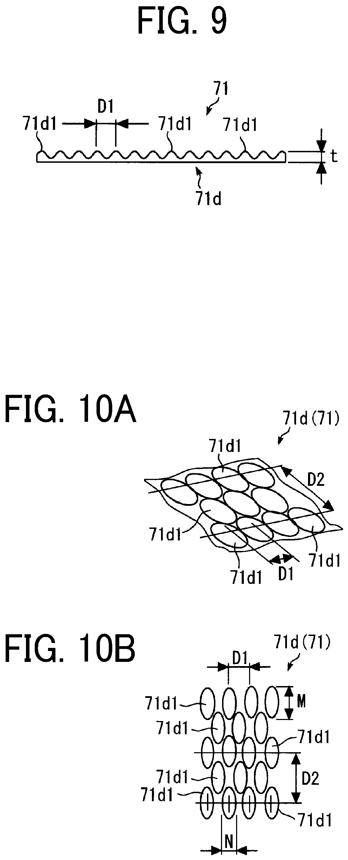

FIG. 9 is a cross-sectional view of the sheet conveyance guide 71 of Modification 2.

FIG. 10A is a perspective view of the sheet conveyance guide 71 of FIG. 9.

FIG. 10B is a top view of the sheet conveyance guide 71 of FIG. 9.

As illustrated in FIGS. 9, 10A, and 10B, the sheet conveyance guide 71 in Modification 2 includes a metal plate 71d with fine irregularities being made over the face that is to face the sheet P.

Specifically, the sheet conveyance guide 71 of Modification 2 does not include the sheet material 71b that is made of resin and has irregularities (convex and concave portions) on the base 71a, as illustrated in FIGS. 5A to 6B. More specifically, the sheet conveyance guide 71 of Modification 2 includes a metal plate 71d (metallic sheet member) having a single layer, made of metal, and has multiple convex portions 71d1 (fine irregularities) on the face to face the sheet P. In other words, the sheet conveyance guide 71 has the surface that is to face the sheet P. The sheet conveyance guide 71 includes fine irregularities that include multiple convex and concave portions made of metallic material over the surface of the sheet conveyance guide 71.

To be more specific, the material of the metal plate 71d in Modification 2 includes stainless steel, particularly "Runner Stainless" (manufactured by TAKASAGO TEKKO K.K.). The surface of the metal plate 71d has been subjected to emboss processing so that multiple convex portions 71d1 having an elliptical shape are arranged in a staggered manner. The lateral length N of each of the multiple convex portions 71d1 ranges 4 mm to 4.5 mm and the longitudinal length M of each of the multiple convex portions 71d1 ranges 8.5 mm to 9.5 mm. The adjacent convex portions of the multiple convex portions 71d1 are arranged to have the lateral pitch D1 ranging 6 mm to 6.2 mm and the longitudinal pitch D2 ranging 13.5 mm to 14.5 mm. Further, the emboss processing has been subjected to a flat plate having the thickness of 1 mm so that the total thickness "t" of the metal plate 71d ranges 1.35 mm ± 0.05 mm. Further, the metal plate 71d is disposed so that the longitudinal direction (vertical direction in FIG. 10B) of each convex portion 71d1 having an elliptical shape is equal to the sheet conveyance direction of the sheet P.

In Modification 2, the openings 71c (see FIG. 5A) through which a conveyance roller protrudes may be formed in the metal plate 71d of the sheet conveyance guide 71.

In Modification 2, a holding member (for example, a stay made of a galvanized steel sheet) that holds the metal plate 71d on which the multiple convex portions 71d1 are formed or a handle for opening and closing the metal plate 71d at the time of sheet jamming may be fastened to the metal plate 71d using, for example, blind rivets. In this case, simple pilot hole processing alone is performed on both parts to be fastened. In particular, the metal plate 71d is subjected to drawing so that the head of the blind rivet does not protrude from the conveyance face of the sheet conveyance guide 71. The metal plate 71d may be subjected to bending to fasten another member to the metal plate 71d.

As described above, the sheet conveyance guide 71 in Modification 2 uses the metal plate 71d having the irregularities on the surface that is to face the sheet P. Due to such a configuration, if the sheet P repeatedly slides on the metal plate 71d, it is less likely to generate an inconvenience where the face of the metal plate 71d is worn or peeled off due to burrs on the edges of the sheet P. For this reason, attraction of the sheet P to the conveyance face due to abrasion or peeling of the conveyance face of the sheet conveyance guide 71 is less likely to occur. In other words, the inconvenience where the sheet P is electrostatically attracted to the sheet conveyance guides 71 and 72 is stably reduced over time according to the sheet conveyance guides 71 and 72 in Modification 2.

As described above, each of the sheet conveyance guides 71 and 72 according to the present embodiment is a conveyance guide that guides the sheet P to be conveyed in the given direction and has fine irregularities over the whole area of the surface that is to face the sheet P.

As a result, this structure prevents or reduces occurrence of an inconvenience where the sheet P is electrostatically attracted to the sheet conveyance guides 71 and 72.

In the present embodiment, the power source 95 applies the secondary transfer bias to the secondary transfer backup roller 19. In other words, the present disclosure is applied to the image forming apparatus 100 of a repulsive force transfer type. Alternatively, the present disclosure may be applied to an image forming apparatus 100 of an attraction transfer type where the power source applies the secondary transfer bias to the secondary transfer roller 30.

In this case, the secondary transfer bias applied to the secondary transfer roller 30 in the image forming apparatus 100 of the attraction transfer type is opposite in polarity to the secondary transfer bias applied to the secondary transfer backup roller 19 in the image forming apparatus 100 of the repulsive force transfer type. Further, the present disclosure may be applied to an image forming apparatus where the repulsive force transfer type and the attraction transfer type are used in combination.

Additionally, the present disclosure is applied to the image forming apparatus 100 employing the secondary transfer roller 30 as a transfer rotator. Alternatively, the present disclosure may also be applied to an image forming apparatus employing a secondary transfer belt as a transfer rotator.

Additionally, the present disclosure is applied to the image forming apparatus 100 employing the intermediate transfer belt 8 (intermediate transferor) as an image bearer and the secondary transfer roller 30 as a transfer rotator. Alternatively, the present disclosure may also be applied to an image forming apparatus of a direct transfer type. The image forming apparatus of the direct transfer type does not include an intermediate transferor such as an intermediate transfer belt or an intermediate transfer drum, and includes a developing device for developing the toner, a photoconductor drum as an image bearer on which a toner image is developed by the developing device, and a transfer member (transfer body) that is in contact with the photoconductor drum to form a transfer nip region and transfers the toner image on the photoconductor drum to a sheet (recording medium) conveyed to the transfer nip region.

Further, in the above-described embodiments, the present disclosure is applied to the image forming apparatus 100 that forms color image. Alternatively, the present disclosure may also be applied to an image forming apparatus that forms a monochrome image alone.

Even in such a case, an advantageous effect equivalent to that of the present embodiment can be obtained.

Further, the present disclosure is applied to the two sheet conveyance guides (i.e., the lower sheet conveyance guide 71 and the upper sheet conveyance guide 72) vertically disposed in the conveyance guide device 70. However, the present disclosure is not limited to this configuration. For example, the present disclosure may also be applied to one of the lower sheet conveyance guide 71 and the upper sheet conveyance guide 72.

Furthermore, the present disclosure is applied to the lower sheet conveyance guide 71 and the upper sheet conveyance guide 72 disposed downstream from the electric charge applicator 60 in the sheet conveyance direction. However, the conveyance guide according to the present disclosure is not limited to this configuration. For example, the present disclosure may also be applied to any sheet conveyance guide that is capable of electrostatically attracting the sheet P.

Even in such a case, an advantageous effect equivalent to that of the present embodiment can be obtained.

Note that embodiments of the present disclosure are not limited to the above-described embodiments, and it is apparent that the above-described embodiments can be appropriately modified within the scope of the technical idea of the present disclosure in addition to what is suggested in the above-described embodiments. The number, position, and shape of the components described above are not limited to those embodiments described above. Desirable number, position, and shape can be determined to perform the present disclosure.

Note that the aspect of the present disclosure may also be, for example, a combination of Modes 1 to 10 as follows.

### Mode 1

In Mode 1, a sheet conveyance guide (for example, the sheet conveyance guides 71, 72) includes a sheet material (for example, the sheet material 71b, the metal plate 71d). The sheet material has a surface to face a sheet (for example, the sheet P) when the conveyance guide guides the sheet travelling in a given conveyance direction. The sheet material has irregularities over a whole area of the surface to face the sheet.

### Mode 2

In the sheet conveyance guide of Mode 1, the irregularities on the surface of the sheet material are embossed portions (for example, the embossed portions 71b10) arranged in a staggered manner. Each of the embossed portions has an outer diameter of 1 to 1.5 mm and a height of 0.05 to 0.1 mm.

### Mode 3

In the sheet conveyance guide of Mode 1, the irregularities have an arithmetic average roughness of 3 µm to 5 µm.

### Mode 4

In the sheet conveyance guide of any one of Modes 1 to 3, the irregularities are made of a low friction material.

### Mode 5

In the sheet conveyance guide of Mode 4, the low friction material contains carbon.

### Mode 6

The sheet conveyance guide of any one of Modes 1 to 5 further includes a base (for example, the base 71a). The sheet material having the irregularities is attached to a surface of the base that is to face the sheet.

### Mode 7

In the sheet conveyance guide of any one of Modes 1 to 6, the sheet material having the irregularities on the surface includes a metal plate (for example, the metal plate 71d).

### Mode 8

In Mode 8, an image forming apparatus (for example, the image forming apparatus 100) includes an image forming device (for example, the image forming devices 6Y,6M,6C,6K) that forms an image on a sheet (for example, the sheet P), and the sheet conveyance guide (for example, the sheet conveyance guide 71, 72) of any one of Modes 1 to 7.

### Mode 9

The image forming apparatus of Mode 8 further includes a fixing device (for example, the fixing device 50) and an electric charge applicator (for example, the electric charge applicator 60). The fixing device fixes a toner image transferred onto a surface of the sheet conveyed in the conveyance direction. The electric charge applicator is disposed downstream from the fixing device in the conveyance direction. The electric charge applicator applies electric charge to the sheet conveyed in the conveyance direction. The sheet conveyance guide is disposed downstream from the electric charge applicator in the conveyance direction.

### Mode 10

The image forming apparatus of Mode 8 further includes an electric charge applicator (for example, the electric charge applicator 60) and a controller (for example, the controller 90). The electric charge applicator applies electric charge to the sheet conveyed in the conveyance direction. The controller causes the electric charge applicator to apply electric charge to the sheet to reverse a first polarity of charges accumulated on a first face of the sheet and a second polarity of charges accumulated on a second face of the sheet and cause the charging device to apply electric charge to every other sheet in continuous conveyance of the sheets.

The present disclosure is not limited to specific embodiments described above, and numerous additional modifications and variations are possible in light of the teachings within the technical scope of the appended claims. It is therefore to be understood that, the disclosure of this patent specification may be practiced otherwise by those skilled in the art than as specifically described herein, and such, modifications, alternatives are within the technical scope of the appended claims. Such embodiments and variations thereof are included in the scope and gist of the embodiments of the present disclosure and are included in the embodiments described in claims and the equivalent scope thereof.

The effects described in the embodiments of this disclosure are listed as the examples of preferable effects derived from this disclosure, and therefore are not intended to limit to the embodiments of this disclosure.

The embodiments described above are presented as an example to implement this disclosure. The embodiments described above are not intended to limit the scope of the invention. These novel embodiments can be implemented in various other forms, and various omissions, replacements, or changes can be made without departing from the gist of the invention. These embodiments and their variations are included in the scope and gist of this disclosure and are included in the scope of the invention recited in the claims and its equivalent.

Any one of the above-described operations may be performed in various other ways, for example, in an order different from the one described above.

## Claims

1. A sheet conveyance guide (71, 72) comprising a sheet material (71b, 71d), the sheet material (71b, 71d) having a surface to face a sheet (P) when the sheet conveyance guide (71, 72) guides the sheet (P) travelling in a conveyance direction, the sheet material (71b, 71d) having irregularities over a whole area of the surface.

2. The sheet conveyance guide (71, 72) according to claim 1,
wherein the irregularities on the surface of the sheet material (71b, 71d) are embossed portions (71b10) arranged in a staggered manner, and
wherein each of the embossed portions (71b10) has an outer diameter of 1 mm to 1.5 mm and a height of 0.05 mm to 0.1 mm.

3. The sheet conveyance guide (71, 72) according to claim 1,
wherein the irregularities have an arithmetic average roughness of 3 µm to 5 µm.

4. The sheet conveyance guide (71, 72) according to any one of claims 1 to 3,
wherein the irregularities are made of a low friction material.

5. The sheet conveyance guide (71, 72) according to claim 4,
wherein the low friction material contains carbon.

6. The sheet conveyance guide (71, 72) according to any one of claims 1 to 5, further comprising a base (71a),
wherein the sheet material (71b) having the irregularities is attached to the base (71a) on a surface of the base (71a) that is to face the sheet (P).

7. The sheet conveyance guide (71, 72) according to claim 1,
wherein the sheet material (71b) having the irregularities on the surface includes a metal plate (71d).

8. An image forming apparatus (100) comprising:
an image forming device (6Y,6M,6C,6K) configured to form an image on a sheet (P); and
the sheet conveyance guide (71, 72) according to any one of claims 1 to 6.

9. The image forming apparatus (100) according to claim 8, further comprising:
a fixing device (50) configured to fix a toner image transferred onto a surface of the sheet (P) conveyed in the conveyance direction; and
an electric charge applicator (60) disposed downstream from the fixing device (50) in the conveyance direction,
the electric charge applicator (60) being configured to apply electric charge to the sheet (P) conveyed in the conveyance direction,
wherein the sheet conveyance guide (71, 72) is disposed downstream from the electric charge applicator (60) in the conveyance direction.

10. The image forming apparatus (100) according to claim 8 or 9, further comprising:
an electric charge applicator (60) configured to apply electric charge to the sheet (P) conveyed in the conveyance direction; and
a controller (90) configured to:
cause the electric charge applicator (60) to apply the electric charge to the sheet (P) to reverse a first polarity of charges accumulated on a first face of the sheet (P) and a second polarity of charges accumulated on a second face of the sheet (P); and
cause the electric charge applicator (60) to apply the electric charge to every other sheet (P) in continuous conveyance of a plurality of sheets (P).
